Europäisches Patentamt

(19) European Patent Office

Office européen des brevets

(11) Publication number: **0 459 742 A2**

(12) # EUROPEAN PATENT APPLICATION

(21) Application number: **91304786.6**

(51) Int. Cl.⁵ : **B32B 27/32**

(22) Date of filing : **28.05.91**

(30) Priority : **31.05.90 US 531206**
**31.05.90 US 531207**

(43) Date of publication of application :
**04.12.91 Bulletin 91/49**

(84) Designated Contracting States :
**AT BE CH DE ES FR GB GR IT LI LU NL SE**

(71) Applicant : **SHELL OIL COMPANY**
**900, Louisiana Street**
**Houston Texas 77002 (US)**
Applicant : **MITSUI PETROCHEMICAL**
**INDUSTRIES, LTD.**
**2-5, Kasumigaseki 3-chome Chiyoda-ku**
**Tokyo (JP)**

(72) Inventor : **Hwo, Charles C.**
**2710 Sugarwood Drive**
**Sugar Land, Texas 77478 (US)**
Inventor : **Watkins, Larry K.**
**605 N. Main Altamont**
**Illinois 62411 (US)**

(74) Representative : **Myerscough, Philip Boyd et al**
**J.A. Kemp & Co. 14 South Square, Gray's Inn**
**London WC1R 5LX (GB)**

(54) Laminated film with improved tear strength.

(57) A packaging film composition having an improved tear strength comprises a core formed from a butene-1 homopolymer or copolymer coated on one or both sides with a layer of a propylene homopolymer or copolymer optionally blended with a minor amount of a high melt index polybutylene.

EP 0 459 742 A2

The invention relates to a multi-layer, thermoplastic heat-sealable film suitable for packaging applications.

Oriented polypropylene film has become a useful and widely accepted packaging film because of its good moisture barrier properties, stiffness, high strength, and good optical properties. However, the tear strength of polypropylene films is relatively low and improvement has long been needed. Polybutylene films are known to give the strongest tear strength among the unsubstituted polyalphaolefins. However, blending polybutylene into polypropylene does not improve the tear strength of polypropylene significantly. The tear strength of polypropylene may, however, be significantly improved by coextruding polybutylene.

US-A-3,972,964, discloses a coating composition for heat-shrinkable thermoplastic film comprising blends of polybutene-1 with ethylene-propylene copolymer to provide abuse resistance with reduced tackiness without compromising the orientability of the base film. However, in order to achieve this objective the coating composition must contain 5%-40% by weight of polybutene-1. Such a coating composition, while achieving the objectives of abuse resistance and reduced tackiness, does not impart good heat sealability to the film.

U.S. Defensive Publication No. T-955,009 addresses the problem of heat sealability directly and proposes an improvement in the sealability of polypropylene film by coextruding a polypropylene substrate with a coating composition comprising a blend of 10%-59% (by weight) ethylene-propylene copolymer with 90%-41% (by weight) of a homo- or copolymer of a $C_4$ to $C_{10}$ alpha-olefin to form a multilayer film having a polypropylene core with a thin coating on one or both sides.

US-A-4,125,662; US-A-4,275,120; US-A-4,340,060; US-A-4,340,641; US-A-4,339,493; US-A-4,339,494; US-A-4,339,495; and US-A-4,339,496 disclose laminated films having a polypropylene core and polybutylene outer layers.

The processability of a polypropylene/polybutylene structure film is rather poor if the polybutylene is used as a surface layer, due to the sticky nature of polybutylene prepared from the melt. We have found that by sandwiching a polybutylene core layer between propylene polymer layers the sticky problem can be eliminated. Including a small amount of a high melt index polybutylene in the propylene polymer layers can further improve the processability and optics of the laminated films.

According to the invention there is provided a multiple-layer, heat-sealable laminated film comprising:

(a) a core layer formed from a butene-1 homopolymer or a copolymer of butene-1 with ethylene wherein the ethylene content is 0.25% to 15% by weight, and

(b) on one or both sides of said core layer, a layer comprising a homopolymer or copolymer of propylene.

The present invention provides a multi-layer laminated film having an unexpectedly high tear strength and good processability. The film comprises a "core" or substrate of butylene homopolymer or copolymer or blends of two butene-1 polymers or blends of butene-1 polymer with propylene homopolymer or copolymer. This core is coated on one or both sides with a layer or propylene homopolymer or copolymer, the coating forming a "skin" which may comprise from 3% to 30% of the total thickness of the coated film.

The laminated film may be made by any conventional technique in which a skin layer is applied to one or both sides of a core or base layer. Thus a known method of coextrusion, lamination of previously extruded films, emulsion coating, or of extrusion coating can be used to make this film. Coextrusion is preferred.

The film-forming composition, or any component thereof, can be used unaltered or can be modified with additives for improvement of slip, antiblock or static properties of the finished laminated film.

Resins useful for the core layer include low melt index homopolymers of butene-1 and copolymers of ethylene with butene-1 wherein the ethylene content is 0.25% and 10% by weight. The outer skin material may contain any homopolymer of propylene, or a copolymer of propylene with ethylene or with an alpha olefin of 4 to 8 carbon atoms such as butene-1. For most applications it is preferred that the or each outer layer be substantially polypropylene. However, the or each outer layer may comprise a blend of propylene homopolymer or copolymer with any compatible polymeric substance.

For example, an outer layer may comprise a blend of propylene polymer and a high melt index poly-1-butene. The high melt index poly-1-butene suitably contains at least 90%, preferably at least 95%, and more preferably about 97%, by weight of isotactic portions. Useful are isotactic poly-1-butenes having a low molecular weight, e.g. less than 280,000 as determined by solution viscosity in "Decalin" (decahydronaphthalene). Usable poly-1-butenes have a density of 0.900-0.925, preferably 0.905-0.920 and especially 0.910-0.915, g/cm³. Usable poly-1-butenes have melt indices of from 10 to 1000, more preferably 20 to 650, and most preferably 100 to 500, as determined by ASTM D-1238 Condition E, at 190°C. The intrinsic viscosity of the polybutylene may be from 0.03 to 0.20 preferably from 0.06 to 0.11 at 130°C.

The low melt index butene-1 polymer suitably is a butene-1 polymer containing at least 95%, preferably 97%, and most preferably 98%, by weight of isotactic portions. Suitable polybutenes have a density of 0.914 to 0.919 g/cm³ and a melt index of less than 20 g/10 min. at 190°C.

The butene-1 polymers (PB) usable herein are either butene-1 homopolymers or copolymers. If butene-1 copolymers are used, the non-butene comonomer content is preferably 1-30 mole% of ethylene, propylene, or

2

an alpha olefin having from 5 to 8 carbon atoms.

Suitable poly-1-butenes can be obtained, for example, in accordance with Ziegler-Natta low-pressure polymerization of butene-1, e.g. by polymerizing butene-1 with catalysts of $TiCl_3$ or $TiCl_3.AlCl_3$ and $Al(C_2H_5)_2Cl$ at temperatures of 10-50°C, preferably 20-40°C, e.g. according to the process of DE-A-1,570,353. High melt indices can then be obtained by further processing the polymer by peroxide cracking. The polybutylene may be modified to increase surface activity by reaction with, for example, maleic anhydride or other functional group.

The propylene polymer used in the present invention can be any crystallizable propylene polymer. Such a polymer can be prepared by homopolymerizing propylene irrespective of the method used so long as crystallizable polypropylene is formed. Preferred polypropylenes are the substantially isotactic polypropylenes prepared by the Ziegler/Natta or $MgCl_2$-supported catalyst polymerization process.

The propylene polymers usable herein can be propylene homopolymers or copolymers. If propylene copolymers are used, they can be random or block copolymers with the comonomer content preferably 1 to 30 mole % of ethylene, butene, or an alpha olefin having from 5 to 8 carbon atoms.

Propylene polymers useful in the invention preferably have a melt index of less than 60, more preferably 1 to 15, as measured by ASTM D-1238, Condition L at 230°C. A particularly suitable propylene, has a melt index of 2.6 and is available from Shell Chemical Company, of Houston, Texas as PP5A08.

The laminate compositions may also contain additives and fillers, e.g. mold release agents, UV or thermal stabilizers, slip agents, antiblock agents, nucleating agents, pigments, antioxidants or flame retardants.

Blending of the components can occur by one of several methods, for example dry tumble blending, masterbatch or melt compounding techniques. In most cases it is desirable to use the least amount of energy to merge the components into an effective blend. Therefore, the preferred method of blending is dry blending the components in a powder form.

The skin layer of the laminate structure of the invention is usually 2.5 to 20 μm (0.1 to 0.8 mil) for every 25 μm (mil) of total film thickness. Generally preferred is a skin of 7.6 to 15.2 μm (0.3 to 0.6 mil) and a total film thickness of 23 to 51 μm (0.9 to 2 mils).

## EXAMPLES

Laminated films may be prepared having a coating on either one or both sides of the core film. Films were prepared by coextruding a core material of a butylene copolymer with a coating on both sides thereof comprising a propylene homopolymer. The molten polymers were coextruded from a conventional extruder through a flat sheet die, the melt streams being combined in an adaptor prior to being extruded from the die. Each skin layer comprised approximately 1/3 of the total thickness of the film. The resins were extruded at about 204°C (400°F) for the skin material and 218°C (425°F) for the core material

After leaving the die orifice, the coated films were quenched in a water bath at about 10°C (50°F). The quenched sheet was then reheated to about 93°C (200°F) and stretched 5X in the machine direction (MD) and subsequently about 7.5X in the transverse direction (TD). The high edges were trimmed off and the film wound on cores.

Using the same basic procedure, films were prepared having the following composition:

Film 1.  PP5A08 polypropylene, single layer, 38 μm, (1.5 mils)

Film 2.  PP5A08/PB8640 polybutylene/PP5A08, 12.7/12.7/12.7 μm (0.5 mil/0.5 mil/0.5 mil)

Film 3.  PP5A08/PB8640 (50%)+PB8310 polybutylene (50%)/PP5A08, 12.7/12.7/12.7 μm (0.5 mil/0.5 mil/0.5 mil)

Film 4.  PP5A08+PB0800 polybutylene (5%)/PB8640 (50%)+PB8310 (50%)/PP5A08+PB0800 (5%) 12.7/12.7/12.7 μm (0.5 mil/0.5 mil/0.5 mil)

The various materials used for the example films were as follows:

PP5A08 is a polypropylene homopolymer with a melt index of 2.8 g/10 min. at 230°C, density of 0.90 $g/cm^3$ available from Shell Chemical Company, Houston, Texas.

PB8640 is a polybutylene copolymer with an ethylene comonomer content of 0.75% by weight, a melt index of 1.0 g/10 min. at 190°C and a molecular weight of about 550,000, available from Shell Chemical Company.

PB8310 is a polybutylene copolymer with an ethylene comonomer content of 5.5% by weight, a melt index of 4.0 g/10 min. at 190°C, and a molecular weight of about 400,000, available from Shell Chemical Company.

DP0800 is a polybutylene homopolymer with a melt index of 200 g/10 min. at 190°C, molecular weight of 108,000, available from Shell Chemical Company.

The typical physical properties of the high melt index polybutylene (DP0800) are listed below.

## TABLE 1

### Typical Physical Properties of DP0800 Polybutylene

| | ASTM Test Method | Unit English | (Metric) | Polybutylene DP0800 |
|---|---|---|---|---|
| Melt Index @ 190°C | D1238 "E" | – | g/10 min | 200 |
| @ 230°C | D1238 "L" | – | g/10 min | 490 |
| Density | D1505 | lb/ft | g/cm$^3$ | 57.1(0.915) |
| Tensile strength @ yield | D638 | psi | MPa | 2000(13.8) |
| Tensile strength @ break | D638 | psi | MPa | 4200(29.0) |
| Elongation at break | D638 | % | % | 350 |
| Modulus of elasticity | D638 | psi | MPa | 35000(241) |
| Hardness, Shore | D2240 | D scale | D scale | 55(55) |
| Brittleness temperature | D746 | °F | °C | 0°(−18°) |
| Melting point range | DSC | °F | °C | 255−259° (124−126°) |
| Soft point, Vicat | D1525 | °F | °C | 241°(116°) |
| Thermal conductivity, at 77°F (25°C) | C177 | Btu/ft$^2$/ hr/°F/in | kcal/m$^2$ hr/°C/cm | 1.25 (16) |

Table II shows the tear strength improvement obtained by laminating polybutylene or a polybutylene blend between polypropylene layers in Films 2 and 3. Also, Film 4 demonstrates that including a small amount of high melt index polybutylene in the polypropylene layers improves the optical properties while providing high tear strength and improved processability. Films having a polybutylene core and those containing a minor amount of high melt index polybutylene blended with the polypropylene were processed very easily and had no handling problem since the surface was not tacky.

## TABLE II

### Tear Strength Improvement of Polypropylene Film

Film Thickness: 38 μm

| Sample I.D. | 1 | 2 | 3 | 4 |
|---|---|---|---|---|
| Haze, % | 9.7 | 12.2 | 11.7 | 11.2 |
| Clarity, % | 17.7 | 15.5 | 15.9 | 16.2 |
| Gloss (60°) | 78.7 | 76.4 | 75.3 | 78.7 |
| Tear Strength, G/25.4 μm (mil) | | | | |
| MD | 8.3 | 30 | 48 | 23 |
| TD | 211 | 788 | 653 | 866 |

As can be seen from these data, the laminated films of the present invention, i.e. Films 2, 3 and 4, have a significantly higher tear strength than polypropylene alone (Film 1) while retaining the good optical properties and do not have problems associated with a tacky surface.

In addition, Film 4 which contained 5% by weight of a high melt index polybutylene in the outer layers, processed more easily with a lower back pressure and higher throughput rate.

## Claims

1. A multiple-layer, heat-sealable laminated film comprising:
   (a) a core layer formed from a butene-1 homopolymer or a copolymer of butene-1 with ethylene wherein

4

the ethylene content is 0.25% to 15% by weight, and

(b) on one or both sides of said core layer, a layer comprising a homopolymer or copolymer of propylene.

2. A laminated film according to claim 1 wherein the propylene copolymer is a copolymer of propylene with 1 to 30 mole% of ethylene or an alpha olefin of 4 to 8 carbon atoms.

3. A laminated film according to claim 1 or 2 wherein the or each outer layer comprises a blend of propylene homopolymer or copolymer with a compatible polymer.

4. A laminated film according to claim 3 wherein the or each outer layer comprises a blend containing 90 to 99% by weight of the homopolymer or copolymer of propylene and 10 to 1 % by weight of a high melt index, isotactic poly-1-butene having a melt index of 100 to 1000 as determined by ASTM D-1238 Condition E at 190°C.

5. A laminated film according to any one of the preceding claims wherein the or each outer layer is from 7.6 to 15.2 μm (0.3 to 0.6 mils) thick and the total film thickness is 23 to 51 μm (0.9 to 2 mils).

6. A laminated film according to any one of the preceding claims which has been oriented by stretching in two directions substantially at right angles to each other.

7. A laminated film according to any one of the preceding claims which has been formed by coextrusion.